# FASCICULE DE BREVET EUROPEEN

(11) **EP 0 449 707 B1**
(45) Date de publication et mention de la délivrance du brevet: **07.12.1994**
(21) Numéro de dépôt: 91400768.7
(22) Date de dépôt: 21.03.1991
(51) Int. Cl.: B01D 29/35, B01D 29/96

(54) **Filtre destiné notamment à être utilisé dans des installations de filtration des eaux d'une piscine**
Filter, insbesondere für Schwimmbad
Filter, especially for swimming pool

(30) Priorité: 27.03.1990 FR 9003887
(43) Date de publication de la demande: 02.10.1991
(73) Titulaire: KSB S.A., 92400 Courbevoie (FR)
(72) Inventeur: Mabillot, Christian, F-36000 Chateauroux (FR)
(74) Mandataire: Bourgognon, Jean-Marie

(56) Documents cités:
- DE-A- 3 010 182
- FR-A- 2 382 258
- US-A- 4 189 386

## Description

La présente invention se rapporte aux filtres, destinés notamment à être utilisés dans des installations de filtration des eaux d'une piscine.

On connaît déjà une installation de filtration des eaux d'une piscine comprenant un bâti définissant un logement de réception d'un filtre. Le logement est muni d'une ouverture par laquelle l'eau de la piscine est aspirée à l'intérieur du filtre, sous l'effet d'une pompe dont la tubulure d'aspiration débouche dans le logement à l'extérieur du filtre. L'eau, épurée dans le filtre des impuretés les plus grossières, est envoyée ensuite par la pompe à une filtration plus poussée. Ce filtre a la forme d'un panier à face latérale perforée. Une anse permet de le sortir du logement sans avoir à mettre la main au contact des saletés accumulées à l'intérieur. Une fois sorti, il reste cependant difficile à nettoyer. On ne peut pas le passer simplement sous le robinet pour en enlever la saleté.

Au US-A-4.189.386, on décrit un filtre dont le panier est en deux moitiés rabattables l'une contre l'autre. L'organe de levage (7) est d'une pièce. Ce filtre a les mêmes inconvénients que celui décrit ci-dessus.

L'invention y pallie par un filtre que non seulement on peut sortir aisément d'un logement grâce à l'anse, mais encore que l'on peut nettoyer sans avoir à toucher la saleté qui s'y trouve, notamment en le faisant passer sous un jet.

Ce filtre est défini à la revendication 1.
Lorsque le filtre est en place dans le logement, les deux parties sont rabattues l'une contre l'autre et délimitent un espace intérieur du filtre qui est fermé latéralement, comme il convient pour le fonctionnement. Pour nettoyer le filtre, on le sort du logement, on écarte les deux moitiés l'une de l'autre, ce qui ouvre le filtre et permet d'envoyer un jet d'eau perpendiculairement à la surface latérale du panier, tout en maintenant le filtre par l'anse. Comme l'anse est également en deux moitiés rabattues l'une contre l'autre, quand les deux moitiés du panier le sont, on peut sortir, comme auparavant, le panier du logement en le retirant par l'anse, d'une seule main, mais résister au jet de nettoyage perpendiculaire à la face latérale perforée de chaque moitié du panier en tenant cette moitié solidement par sa demi-anse, et de préférence, en tenant le panier ouvert par ses deux demi-anses. On décolmate ainsi le filtre sans avoir à toucher les saletés de la main.

Il est avantageux que chaque moitié du filtre, comprenant chacune une moitié de panier et une moitié d'anse, soit identique, de manière à n'avoir à mouler qu'une seule pièce pour constituer le filtre. A cet effet, de préférence la charnière s'étend sur le fond du panier en le subdivisant symétriquement, bien qu'il soit également possible que la charnière s'étende suivant une génératrice. La charnière comprend des moyens conjugués d'encliquetage qui, de préférence, sont agencés de manière à ne pouvoir se désencliqueter que lorsque les deux moitiés du panier sont éloignées l'une de l'autre. Lorsque le filtre est dans le logement de l'installation de filtration, et alors que les deux moitiés sont rapprochées l'une de l'autre, on est sûr que le filtre ne peut pas s'ouvrir intempestivement par le fond le long de la charnière mais, lorsque le filtre a été sorti du logement et lorsque l'on a écarté les deux moitiés, on peut les désencliqueter et les nettoyer indépendamment l'une de l'autre, ce qui permet de mieux tenir la moitié de filtre sous le jet de nettoyage. Suivant un mode de réalisation, la charnière comprend, pour chaque moitié de filtre, une paire de lèvres et un charnon disposés en des emplacements symétriques par rapport à la médiatrice de la ligne d'articulation de la charnière. De préférence, l'intervalle entre les lèvres correspond à un arc d'angle au centre par rapport à l'axe du charnon conjugué, de 100 à 140° environ.

Pour mieux maintenir en position rabattue les moitiés du panier et pour mieux les guider lors de leur rapprochement, l'un des bords en regard de l'une des moitiés est en fourche dans laquelle s'encliquète le bord de l'autre moitié du panier.

Pour prévenir tout engorgement, des pièces d'écartement sont de préférence issues de la face latérale extérieure du panier.

Pour contribuer au bon maintien en contact des moitiés rabattues l'une contre l'autre, les moitiés d'anse comportent des éléments conjugués d'encliquetage.

L'invention vise également uns installation de filtration, comprenant un bâti définissant un logement de réception d'un filtre, ce logement étant muni d'une ouverture disposée de manière à mettre l'intérieur du filtre en communication avec l'extérieur, et d'un orifice placé de manière à mettre la partie du logement se trouvant à l'extérieur du filtre en communication avec l'extérieur, et d'un orifice placé de manière à mettre la partie du logement se trouvant à l'extérieur du filtre en communication avec la tubulure d'aspiration d'une pompe, le filtre étant du type suivant l'invention.

Au dessin annexé, donné uniquement à titre d'exemple :
la figure 1 est une vue partiellement en coupe d'une installation suivant l'invention ;

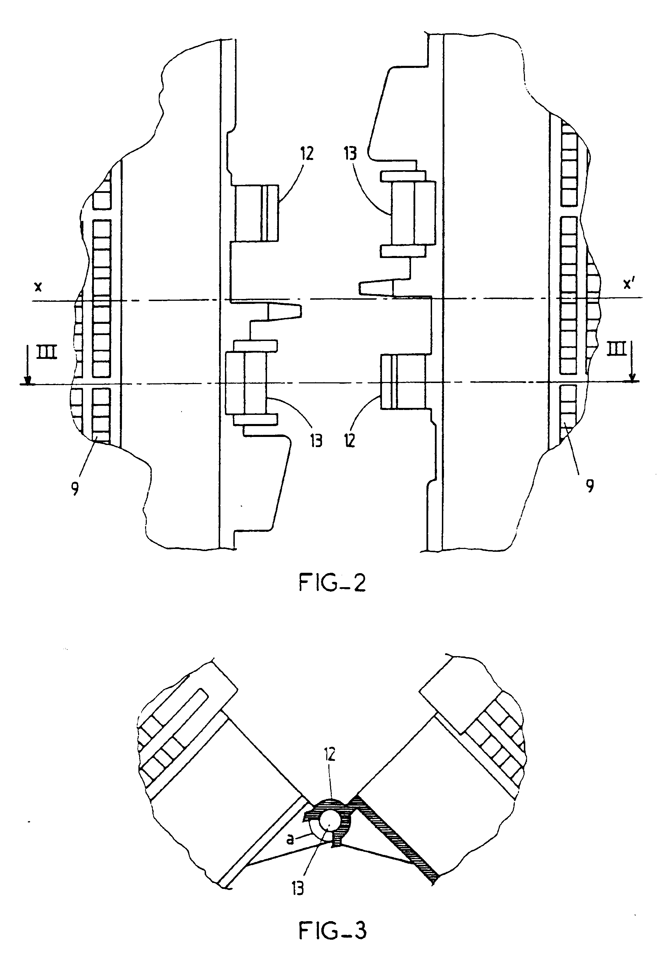

la figure 2 est une vue partielle en coupe et éclatée des deux moitiés du panier dans la région de la charnière; et
la figure 3 est une vue partielle en coupe, suivant la ligne III-III de la figure 2.

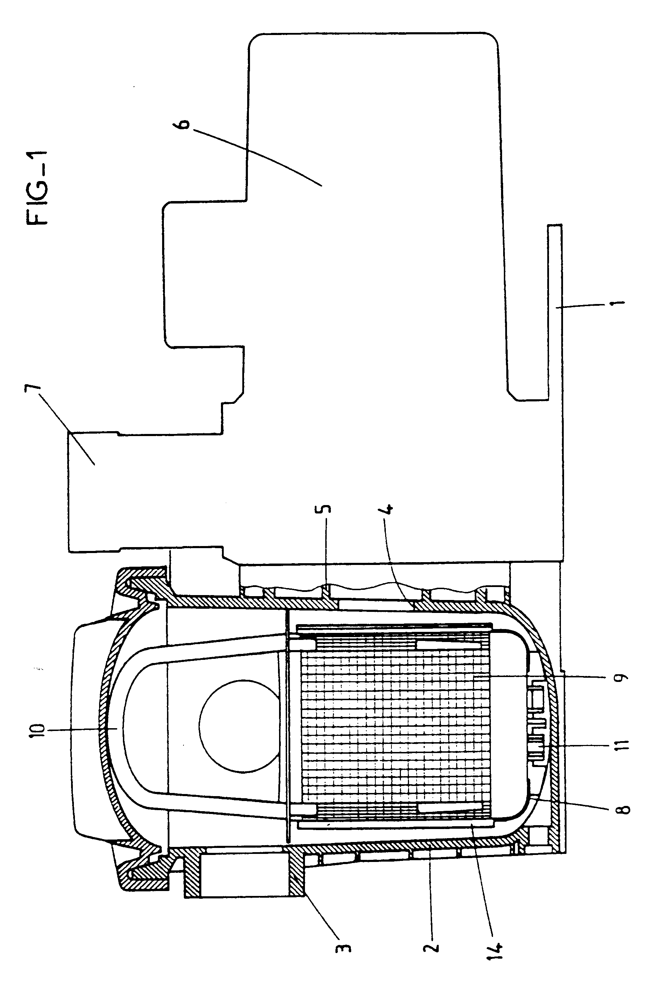

L'installation de filtration, représentée à la figure 1, comporte un bâti 1 définissant un logement 2 de réception d'un filtre. Ce logement est muni d'une ouverture 3 disposée de manière à mettre l'intérieur du filtre en communication avec l'extérieur, à savoir avec la piscine, et d'un orifice 4 placé de manière à mettre la partie du logement 2 se trouvant à l'extérieur du filtre en communication avec la tubulure d'aspiration 5 d'une pompe 6 dont la tubulure de refoulement 7 mène à une installation de filtration plus poussée. Le filtre est constitué d'un panier ayant un fond 8, une face latérale perforée 9 et une anse 10. Le filtre est en matière plastique. Le panier est constitué de deux parties, rabattables l'une contre l'autre par l'intermédiaire d'une charnière désignée, dans son ensemble, par la référence 11. L'anse 10 est également constituée de deux moitiés qui sont rabattues l'une contre l'autre quand les deux moitiés du panier le sont, la partie droite d'une demi-anse comportant des tenons, tandis que la partie gauche comporte des évidements, en sorte que les tenons s'encliquètent dans les évidements lorsque les deux moitiés d'anse qui sont identiques sont appliquées l'une contre l'autre. La charnière 11 s'étend le long d'un diamètre du fond plein du panier et comporte, pour chaque moitié de filtre, une paire de lèvres 12 et un charnon 13 disposés en des emplacements symétriques par rapport à la médiatrice XX′ de la ligne d'articulation de la charnière. L'intervalle entre les lèvres 12 correspond à un arc d'angle au centre a, par rapport à l'axe du charnon 13 conjugué, de 120°.

L'un des bords s'étendant suivant une génératrice de l'une des moitiés du panier est en fourche dans laquelle s'encliquète le bord de l'autre moitié du panier. Il est en outre prévu des pièces d'écartement 14 qui sont issues de la face latérale extérieure du panier.

## Revendications

1. Filtre constitué d'un panier à face latérale (9) perforée surmonté d'une anse (10), dont le panier est en deux moitiés rabattables l'une contre l'autre par l'intermédiaire d'une charnière (11), caractérisé en ce que l'anse (10) est en deux moitiés rabattues l'une contre l'autre quand les deux moitiés du panier le sont.

2. Filtre suivant la revendication 1, caractérisé en ce qu'il est en deux moitiés, comprenant chacune une moitié de panier et une moitié d'anse, qui sont identiques.

3. Filtre suivant la revendication 1 ou 2, caractérisé en ce que la charnière s'étend sur le fond (8) du panier en le subdivisant symétriquement.

4. Filtre suivant l'une des revendications 1 à 3, caractérisé en ce que la charnière comprend des moyens conjugués d'encliquetage (12, 13).

5. Filtre suivant la revendication 4, caractérisé en ce que les moyens conjugués d'encliquetage sont agencés de manière à ne pouvoir se désencliqueter que lorsque les deux moitiés du panier sont éloignées l'une de l'autre.

6. Filtre suivant l'une des revendications 1 à 5, caractérisé en ce que la charnière comprend, pour chaque moitié de filtre, une paire de lèvres (12) et un charnon (13), disposés en des emplacements symétriques par rapport à la médiatrice (XX′) de la ligne d'articulation de la charnière.

7. Filtre suivant la revendication 7, caractérisé en ce que l'intervalle entre les lèvres (12) correspond à un arc d'angle au centre (a), par rapport à l'axe du charnon (13) conjugué, de 100 à 140° environ.

8. Filtre suivant l'une des revendications 1 à 8, caractérisé en ce que l'un des bords de l'une des moitiés du panier est en fourche dans laquelle s'encliquète le bord de l'autre moitié du panier.

9. Filtre suivant l'une des revendications 1 à 9, caractérisé en ce que des pièces d'écartement (14) sont issues de la face latérale extérieure du panier.

10. Filtre suivant l'une des revendications 1 à 10, caractérisé en ce que les moitiés d'anse comportent des éléments conjugués d'encliquetage.

11. Installation de filtration comprenant un bâti (1) définissant un logement (2) de réception d'un filtre, ce logement étant muni d'une ouverture (3), disposée de manière à mettre l'intérieur du filtre en communication avec l'extérieur, et d'un orifice (4) placé de manière à mettre la partie du logement se trouvant à l'extérieur du filtre en communication avec la tubulure d'aspiration (5) d'une pompe, caractérisée en ce que le filtre est tel que défini aux revendications précédentes.

## Claims

1. Filter consisting of a cage having a perforated lateral face (9) and surmounted by a handle (10), said cage consisting of two pivotable halves that can be pivoted into contact with each other by means of a hinge (11), characterized in that said handle (10) consists of two halves pivoted against each other whenever the two halves of the cage are so arranged.

2. Filter according to claim 1, characterized in that it consists of two identical halves each comprising one half of the cage and one half of the handle.

3. Filter according to claim 1 or 2, characterized in that the hinge extends across the bottom (8) of the cage, dividing it symmetrically.

4. Filter according to one of the claims 1 through 3, characterized in that the hinge comprises combined latching means (12, 13).

5. Filter according to claim 4, characterized in that said combined latching means are arranged so as to be restricted from unlatching unless the two halves of the cage are away from each other.

6. Filter according to one of claims 1 through 5, characterized in that the hinge comprises, for each half of the filter, one pair of lips (12) and a bolt eye (13) arranged locations symmetrical with respect to the mid-perpendicular (XX') of the hinge's articulation line.

7. Filter according to claim 7, characterized in that the spacing of the lips (12) corresponds, at central point (a), to an arc subtending an angle of approx. 100° - 140° with respect to the axis of the combined bolt eye (13).

8. Filter according to one of claims 1 through 8, characterized in that one of the edges of one of the cage halves is of a fork-like shape into which the edge of the other half of the cage will mesh.

9. Filter according to one of claims 1 through 9, characterized in that spacing members (14) project from the outer lateral face of the cage.

10. Filter according to one of claims 1 through 10, characterized in that the handle halves comprise combining means of latching.

11. Filtering system forming a structure (1) defining a receptacle (2) designed to receive a filter, which receptacle is provided with an opening (3) arranged so as to link the inside of the filter with the outside, and an orifice (4) located so as to link the portion of the receptacle located outside the filter with the intake tubing (5) of a pump, characterized in that said filter is as defined in the preceding claims.

## Patentansprüche

1. Filter bestehend aus einem mit einer gelochten Seitenfläche (9) ausgelegten Korb, über dem ein Griff (10) steht, dessen Korb aus zwei gegeneinander mittels eines Scharniers (11) klappbaren Hälften besteht, dadurchgekennzeichnet, daß der Griff (10) aus zwei gegeneinander geklappten Hälften besteht, wenn die beiden Körbhälften geklappt sind

2. Filter nach dem Anspruch 1 dadurchgekennzeichnet, daß er aus zwei Hälften besteht, wobei jede Hälfte aus einer Korb- und einer Griffhälfte besteht, die identisch sind.

3. Filter nach dem Anspruch 1 oder 2 dadurchgekennzeichnet, daß das Scharnier auf dem Korbboden (8) verläuft und ihn symmetrisch unterteilt.

4. Filter nach einem der Ansprüche 1 bis 3 dadurchgekennzeichnet, daß das Scharnier aus zusammenarbeitenden Einrastmitteln (12, 13) besteht.

5. Filter nach dem Anspruch 4 dadurchgekennzeichnet, daß die zusammenarbeitenden Einrastmittel so ausgelegt sind, daß sie sich erst ausrasten können, wenn die beiden Korbhälften voneinander entfernt sind.

6. Filter nach einem der Ansprüche 1 bis 5 dadurchgekennzeichnet, daß das Scharnier für jede Filterhälfte aus einem Lippenpaar (12) und einem Scharnierteil (13) besteht, die an Steilen angeordnet sind, die gegenüber der Mittelsenkrechte (XX') der Gelenklinie des Scharniers symmetrisch sind.

7. Filter nach dem Anspruch 7 dadurchgekennzeichnet, daß der Abstand zwischen den Lippen (12) gegenüber der Scharnierteilachse (13) einem Winkelbogen im Mittelpunkt (a) von 100 bis 140° entspricht.

8. Filter nach einem der Ansprüche 1 bis 8 dadurchgekennzeichnet, daß einer der Ränder einer Korbhälfte als Gabel ausgebildet ist, in die sich der Rand der anderen Korbhälfte einrastet.

9. Filter nach einem der Ansprüche 1 bis 9 dadurchgekennzeichnet, daß Abstandsteile (14) aus der Außenseitenfläche herausgebildet sind.

10. Filter nach einem der Ansprüche 1 bis 10 dadurchgekennzeichnet, daß die Griffhälften zusammenarbeitende Einrastmittel beinhalten.

11. Filteranlage bestehend aus einem Gestell (1), der eine Aufnahme (2) für ein Filter bildet, wobei diese Aufnahme eine Öffnung (3) aufweist, die so angeordnet ist, daß sie den Filterinnenraum mit dem Außenraum in Verbindung bringt und aus einer Öffnung (4), die so angeordnet ist, daß sie das Aufnahmeteil, das sich außerhalb des Filters befindet, mit dem Saugrohr (5) einer Pumpe in Verbindung bringt dadurchgekennzeichnet, daß das Filter so ausgebildet ist, wie durch die vorhergehenden Ansprüche definiert.
